# EUROPEAN PATENT SPECIFICATION

(11) **EP 3 013 681 B1**
(45) Date of publication and mention of the grant of the patent: **06.05.2020**
(21) Application number: 14750973.1
(22) Date of filing: 10.02.2014
(51) Int. Cl.: B64B 1/26

(54) **IMPROVED AIRSHIP**
VERBESSERTES LUFTSCHIFF
DIRIGEABLE AMÉLIORÉ

(30) Priority: 14.02.2013 US 201313767844; 31.05.2013 US 201313907320
(43) Date of publication of application: 04.05.2016
(73) Proprietor: Barber, Phillip, Kalamazoo, Michigan 49004 (US)
(72) Inventor: Barber, Phillip, Kalamazoo, Michigan 49004 (US)
(74) Representative: London IP Ltd
(86) International application number: PCT/US2014/015519
(87) International publication number: WO 2014/126840

(56) References cited:
- DE-A1-102004 005 738
- DE-C- 245 790
- US-A- 1 895 518
- US-A- 2 384 893
- US-A- 2 384 893
- US-A- 2 465 457
- US-A- 2 465 457
- US-A- 2 475 786
- US-A- 5 115 997
- US-A- 5 115 997
- US-A1- 2009 152 391
- US-A1- 2009 152 391

## Description

### CROSS REFERENCE TO RELATED APPLICATIONS:

This application claims the benefit of:
- USPTO 13/767,844 file date Feb.14, 2013,
- PCT/US2014/015519 file date Feb. 10, 2014, WIPO Publication No. WO2147126840

### BACKGROUND OF THE INVENTION

The present invention relates to airships and more particularly to airships having internal or ducted propulsion systems.

Airships are well known, and have grown in popularity in recent years.

It is also well known that airships or dirigible type of aircraft are useful where quiet, the ability to hover in one place for an extended period, and to land in un-developed areas are desired. Yet conventional designs are lacking for speed, efficiency, and maneuverability.
And, that previous airship designs are slow, sluggush, innefficient and, incapable in high-wind gusts, and adverse weather.

Over the years there have been numerous improvements made to airships, and many designs to solve the problems described above.
These designs have generally been concentrated on the area of buoyancy control, propulsion, and aerodynamics, yet the best designs do not adequately solve the problems of slow, sluggush, innefficient, and high-wind-gust, and adverse-weather incapability to a satisfactory degree.

U.S. Pat. No. 6,607,163 discloses a conventional conical shaped airship with near space buoyancy and propulsion means however it does not have a tubular straight fuselage, non-protruding attitudinal control wings, air deflector cones, an inner air passageway, internal propulsion means, or outer atmospheric propulsion & attitudinal control means.

### BACKGROUND OF THE INVENTION (cont)

U.S. Pat. No. 5,071,090 shows a conventional conical shaped airship with an internal air passageway, and internal propulsion means, however it does not have a tubular straight fuselage, non-protruding attitudinal control wings, air-inlet & air outlet funnels, or air deflector cones, or outer atmospheric propulsion & attitudinal control means.

U.S. Pat. No. 4,967,983 describes an airfoil type airship with an internal air passageway, however it does not have a tubular straight fuselage, non-protruding attitudinal control wings, air deflector cones, or outer atmospheric propulsion & attitudinal control means.

U.S. Pat. No. 1,835,260 shows a conventional conical shaped airship with an internal air passageway, and internal propulsion means, however it does not have a fuselage, non-protruding attitudinal control wings, air deflector cones, or outer atmospheric propulsion & attitudinal control means.

U.S. Pat. No. 2,384,893 shows an airfoil airship having an internal air passageway however it does not have a tubular straight fuselage, non-protruding attitudinal control wings, air deflector cones, or outer atmospheric propulsion & attitudinal control means.

U.S. Pat. No. 3,288,397 shows a tri-hull airship airfoil with conventional elliptical shaped airship fuselages affixed together comprising an air-ship airfoil, having external control apertures and external propulsion means however it does not have a tubular straight fuselage, non-protruding attitudinal control wings, air deflector cones, an inner air passageway, an internal propulsion means, or outer atmospheric propulsion & attitudinal control means.

### SUMMARY OF THE INVENTION

A main advantage of the present invention is providing an improved airship that attempts to solve the problems of conventional airships detailed herein by incorporating one or more of the characteristics discussed in the embodiments listed below.

Accordingly several advantages of one or more aspects of the present invention are to provide an airship having improved speed performance, maneuverability, efficiency, and adverse weather capability.

It is a further advantage of the invention to provide an airship with reduced air displacement, forward air resistance, and rearward drag of the airship.

It is another advantage of the invention to provide an airship with improved airflow direction into, out of, and around the airship.

It is yet another advantage of the invention to provide an airship with improved attitudinal, directional, pitch, roll, & yaw, control, further, improved airflow control into, out of, and around the airship.

It is still another advantage of the invention to provide an improved airship with propulsive, attitudinal & directional control in space, air atmosphere, and transition to and from thereof.

The foregoing and other advantages are realized by the airship according to claim 1, with preferred embodiments defined in the dependent claims. There is provided a linear straight tubular shaped fuselage, having an inner air passageway axially extending there-through tapering inwardly from the furthest circumferential peripheral exterior edges of the fuselage fore, toward the interior mid region of the airship like a funnel, forming an air inlet in the fuselage fore, which then connects to the inner air passageway; propelling air into and out of the airship is the propulsion system located inside the inner air passageway which extends downstream and continues to the airship aft tapering outwardly like a funnel to the furthest circumferential peripheral exterior edges of the fuselage aft forming an air outlet in the aft of the fuselage.

This causes air to be transported from the front of the airship, into and through the inner air passageway out of and behind the airship, thereby moving the airship through the air.

The straight tubular shaped fuselage also having a plurality of air deflector cones axially centrally positioned substantially inside and extending from the air inlet and outlet openings fore and aft in the fuselage, connectedly affixed to the air inlet funnel and fuselage which direct airflow into and out of the airship to the circumferential peripheral regions of the air inlet and outlet openings, into, out-of, & through the inner air passageway which extends axially through the fuselage, thereby directing the airflow into, through, and out of the airship fuselage.

The plurality of airship deflector cones further providing containment for a plurality of lighter than air resilient gas bags thereby providing dynamic buoyant lift further adding to the airships buoyancy.

Further a plurality of bifurcated active and non-active winged control surfaces located at the fore and aft of the air inlet and outlet inner air way openings. The winged control surfaces being positioned horizontally and vertically across the inner air way openings, having the active control surfaces being rotate-ably, hinge-ably, attached to the non active control surfaces, and a plurality of actuators attached between the air intake and air outlet sections of the fuselage and to the control surfaces thereby operate-ably, rotate-ably, actuating the hinged active control surfaces respective to their non active control surfaces.

Thereby operate-ably, controlling direction of air flow into the air inlet opening and out of the air outlet opening; controlling direction, pitch, roll and yaw, of the airship.

The result is an improved airship having reduced air displacement, forward air resistance, rearward drag, fuel economy, speed performance, maneuverability, efficiency, and adverse weather capability.

### BRIEF DESCRIPTION OF THE DRAWINGS

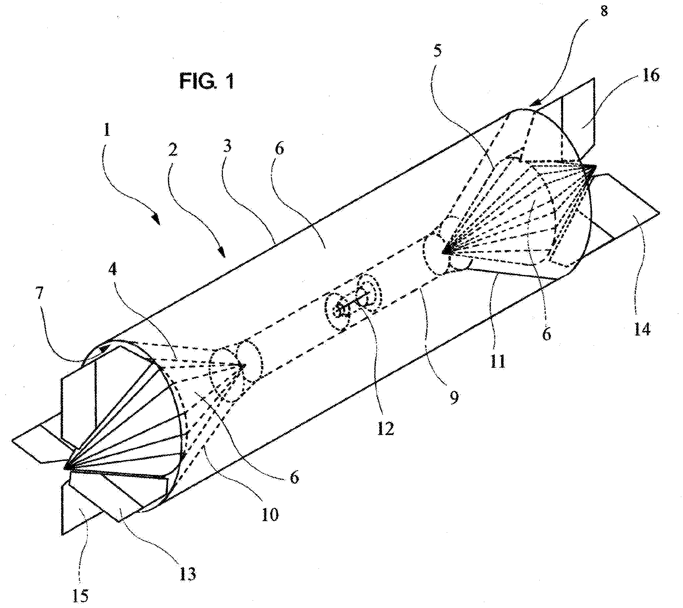

A clear conception of the advantages and features constituting the present invention, and of the construction and operation of typical mechanisms provided with the present invention, will become more readily apparent by referring to the exemplary, and therefore non-limiting, embodiments illustrated in the drawings accompanying and forming a part of this specification, wherein like reference numerals designate the same elements in the several views, and in which figures 1, 2, 3, 4, 5, 6, 7, 8, 9, 10, 10A, 11, & 11A illustrate various views of embodiments of the present invention wherein:
FIG. 1 is a sectional perspective view of the tubular airship;
FIG. 2 is a sectional side view of the tubular airship;
FIG. 3 is a sectional side view of the tubular airship showing the aerodynamic flow through, around, over and under the fuselage;
FIG. 4 is a sectional side view of the tubular airship showing the aerodynamic flow through, around, over and under the tri-tube airship fuselage embodiment of the present invention;
FIG. 5 is a schematic sectional end view showing the tri-tube airship fuselage embodiment of the present invention;
FIG. 6 is a sectional top or bottom view showing the tri-tube airship fuselage embodiment of the present invention;
FIG. 7 is a schematic sectional aft view of the present invention;
FIG. 8 is a schematic sectional aft view of the present invention;
FIG. 9 is a sectional perspective view of the tubular airship showing the aft control surface only embodiment of the present invention;
FIG. 10 is a sectional perspective view of the airship showing the tubular airship polygonal radar resistant fuselage embodiment of the present invention;
FIG. 10A is a sectional perspective partial view of the airship showing the aerodynamic control surfaces of the radar resistant fuselage embodiment of the present invention;
FIG. 11 is a sectional perspective view of the airship showing the propulsion rocket thrust nozzle, directional control rocket thruster nozzles, and reverse rocket thrust nozzle of the airship spaceship embodiment of the present invention;
FIG. 11A is a sectional schematic end view of the airship showing the propulsion rocket engine thrust nozzle, and directional control rocket engine thruster nozzles of the airship spaceship embodiment of the present invention;

In describing the preferred embodiment of the invention, which is illustrated in the drawings, specific terminology will be resorted to for the sake of clarity. However, it is not intended that the invention be limited to the specific terms so selected and it is to be understood that each specific term includes all technical equivalents which operate in a similar manner to accomplish a similar purpose. For example, the word "attached," "operate-ably," "rotate-ably," "connectedly," or terms similar thereto are often used. They are not limited to direct connection but include connection through other elements where such connection is recognized as being equivalent by those skilled in the art.

### DESCRIPTION OF THE PREFERRED EMBODIMENT

The present invention and the various features and advantageous details thereof are explained more fully with reference to the non-limiting embodiments described in detail in the following description.

Various alternative embodiments and modifications to the invention will be made apparent to one of ordinary skill in the art by the following detailed description taken together with the drawings.

Accordingly it will also be understood the present invention as disclosed herein shall include materials & equipment including but not limited to pluralities of heat shields, motors, engines, compressors, compressed gas tanks, fuels, fuel tanks, pumps, pipes, valves, hoses, fittings, hydraulics, solenoids, actuators, batteries, computers, electronics, sensors, receivers, guidance & control systems, electronics, motors, servos, wires, connectors, connecting rods, composites, laminates, fabrics, carbon fiber, aluminum, titanium, gaskets, fasteners, adhesives, sealants, lubricants, gases, gaseous liquids, liquids, propulsive fuels, and all other materials, parts, equipment & apparatus for airship, aircraft and spacecraft construction &, operations shall be used.

Referring now to FIG. 1, it will be seen a schematic perspective view preferred embodiment of the invention; a tubular airship made in accordance with the present invention designated generally by reference numeral 1, is shown with its primary components.

The tubular airship 1, has a linear straight tubular shaped fuselage designated generally by reference numeral 2.

Fuselage 2, having 6 sections: a linear straight tubular hull 3, an air deflector cone aft 4, an air deflector cone fore 5, an inner air passageway 9, an inner- air passageway outlet funnel 10, an inner- air passageway inlet funnel 11.

The fuselage 2, tubular hull 3, inner air passageway 9, extends axially there-through the tubular hull 3, tapering inwardly from the furthest circumferential peripheral exterior edges in fore of tubular hull 3, forming inner air passageway inlet funnel 11, in fore of tubular hull 3, connecting to inner air passageway 9, axially extending downstream continuing to airship fuselage air outlet aft tapering outwardly to the furthest circumferential peripheral exterior edges in aft of tubular hull 3, forming inner air passageway outlet funnel 10, in aft of tubular hull 3.

The fuselage 2, further shown having fuselage air deflector cone fore 5, positioned centrally substantially inside and extending from fuselage air inlet 8, connectedly affixed to the airship fuselage tubular hull 3, fuselage inner air passageway inlet funnel 11, so as to allow for an air passageway between the fuselage inner air passageway inlet funnel 11, and the fuselage air deflector cone fore 5.

Air deflector cone fore 5, position further defined as centrally substantially located inside and extending out of fuselage inner air passageway inlet funnel 11, connecting to inner air passageway 9, containing propulsion means 12, centrally axially located within inner air passageway 9, which is connected to inner air passageway outlet funnel 10, forming air outlet 7, having air deflector cone aft 4, positioned centrally substantially inside and extending from fuselage air outlet 7. Air deflector cone aft 4, position further defined as centrally substantially located inside and extending out of fuselage inner air passageway outlet funnel 10, connectedly affixed to the airship fuselage tubular hull 3, and the fuselage inner air passageway outlet funnel 10, so as to allow for an air passageway between the fuselage inner air passageway inlet funnel 11, and the fuselage air deflector cone aft 4.

The fuselage air deflector cones direct air flow to the circumferential perimeters of the airship air inlets and outlets, thereby minimizing forward air resistance and rearward drag.

The linear straight tubular airship 1, further shown having aft bifurcated active & non active horizontal attitudinal control wings rotate-ably, hinge-ably, attached 13, and aft bifurcated active & non active vertical attitudinal control wings rotate-ably, hinge-ably, attached 15, affixed to a plurality of actuators connected between fuselage inner air passageway outlet funnel 10, and the fuselage air deflector cone aft 4, in the fuselage air outlet 7.

It will be further understood the linear straight tubular airship 1, further shown having fore bifurcated active & non active horizontal attitudinal control wings rotate-ably, hinge-ably, attached 14, and, fore bifurcated active & non active vertical attitudinal control wings rotate-ably, hinge-ably, attached 16, affixed to a plurality of actuators connected between fuselage inner air passageway inlet funnel 11, and the fuselage air deflector cone fore 5, in the fuselage air inlet 8. Thereby actuate-ably controlling direction of air flow into fuselage air inlet 8, and out of fuselage air outlet 7, providing directional, pitch, roll & yaw control of the linear straight tubular airship 1.

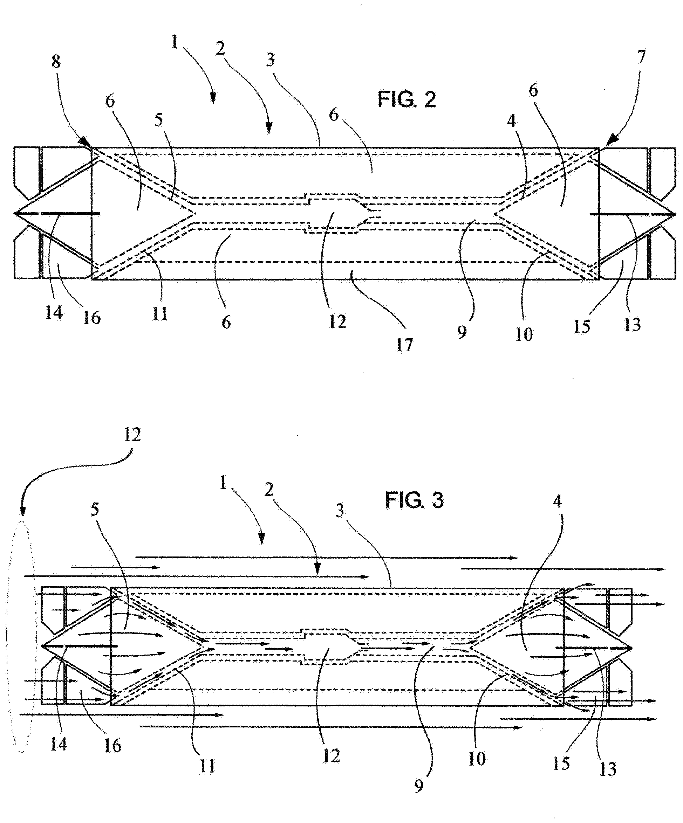

Referring now to figure FIG.2 a side schematic view will be seen further showing the primary components of the tubular airship 1, having the fuselage 2, including the fuselage tubular hull 3, the fuselage air deflector cone fore 5, the fuselage air deflector cone aft 4, the fuselage inner air passageway 9, the fuselage inner air passageway outlet funnel 10, the fuselage inner air passageway inlet funnel 11, the propulsion means 12, the horizontal control wings aft 13, the vertical control wings aft 15, the horizontal control wings fore 14, the vertical control wings fore 16, a plurality of resilient gas bags 6, the fuselage air inlet 8, the fuselage air outlet 7, and the cargo & operating equipment bay 17.

Referring to FIG.3 a schematic side view will be seen, providing an understanding of the airflow 18, into the fuselage inner air passageway inlet funnel 11, over the vertical control wings fore 16, the horizontal control wings fore 14, around the fuselage air deflector cone fore 5, through the fuselage inner air passageway 9, through the propulsion means 12, and out through the fuselage inner air passageway outlet funnel 10, around the fuselage air deflector cone aft 4, over the vertical control wings aft 15, and horizontal control wings aft 13, then out of, and behind the airship. Thereby moving the air from in front of the airship, through, and behind the airship.

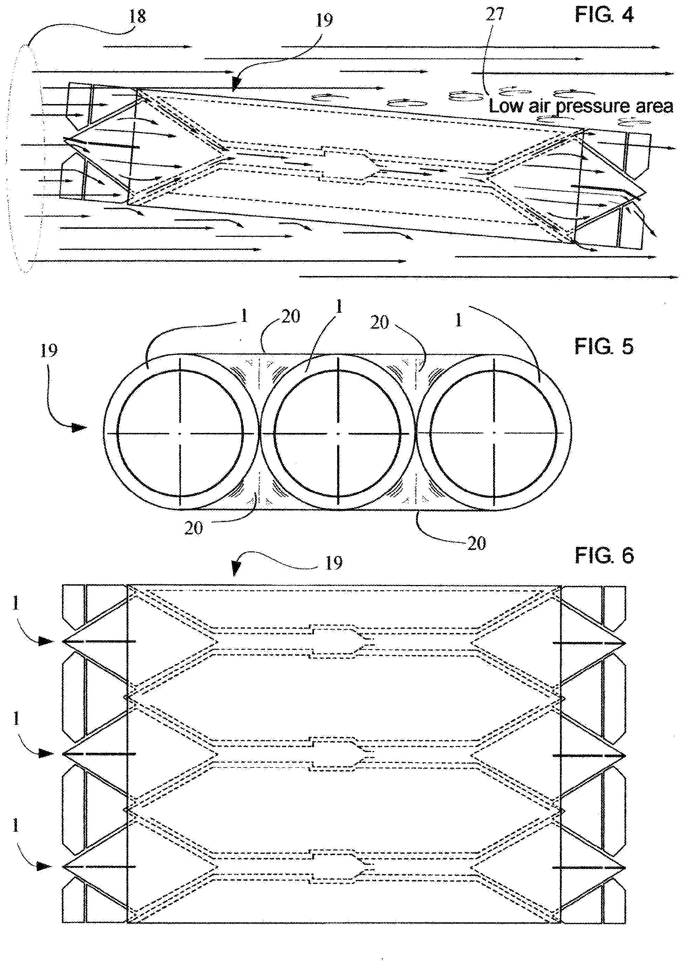

Referring to FIG. 4 a schematic side view of the tubular airship 1, tri-tube airship 19, embodiment of the disclosed invention will be seen. Further it will be understood the airflow 18, into, through, out of, and around the tri-tube airship 19. More particularly the low air pressure area 27, lifting action generated by the tri-tube airships airfoil aerodynamics provided by the tri-tube airship 19, as the airship is positioned relative to oncoming airflow over through, out of, behind, and under the tri-tube airship 19.

Referring now to FIG. 5, a schematic sectional end view will be seen showing the tubular airship 1, tri-tube airship 19, embodiment of the disclosed invention. Further it will be understood that the tri-tube airship 19, comprises a plurality of single tube airships 1, joined and connected together in parallel, having cowlings 14, enclosing the fore and aft fuselage sections of the tri-tube airship 19, affixed between the plurality of single tube tubular airships 1.

FIG. 4, in addition to the tubular airships 1, lift characteristics disclosed herein. Referring to FIG. 6, a schematic top & bottom view showing a further understanding of the plurality of single tube airships 1, comprising a tri-tube airship 19, embodiment of the present invention.

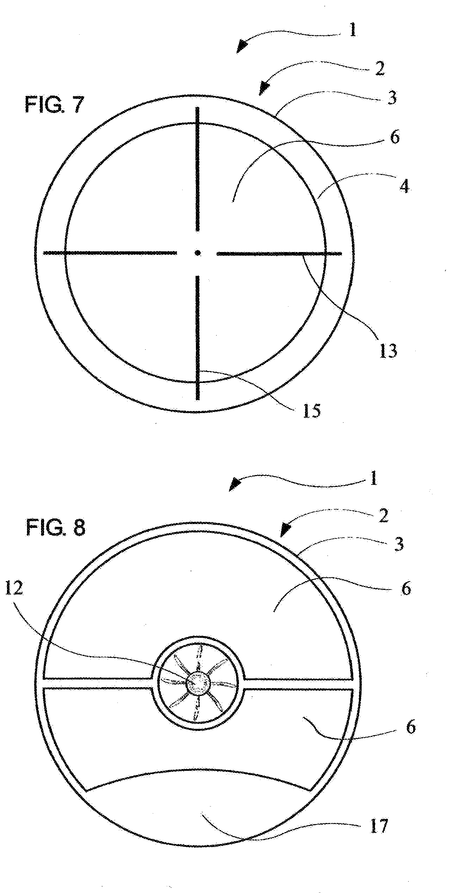

Referring to FIG. 7, a schematic sectional aft view of the present invention will be seen, showing the tubular airship 1, the fuselage 2, the fuselage tubular hull 3, resilient gas bag 6, fuselage air deflector cone aft 4, bifurcated active & non active horizontal attitudinal control wings aft 13, and bifurcated active & non active vertical attitudinal control wings aft 15.

Referring to FIG. 8, a schematic sectional view of the present invention will be seen showing the airship 1, the fuselage 2, the fuselage tubular hull 3, plurality of resilient gas-bags 6, cargo & operating equipment bay 17, propulsion means 12.

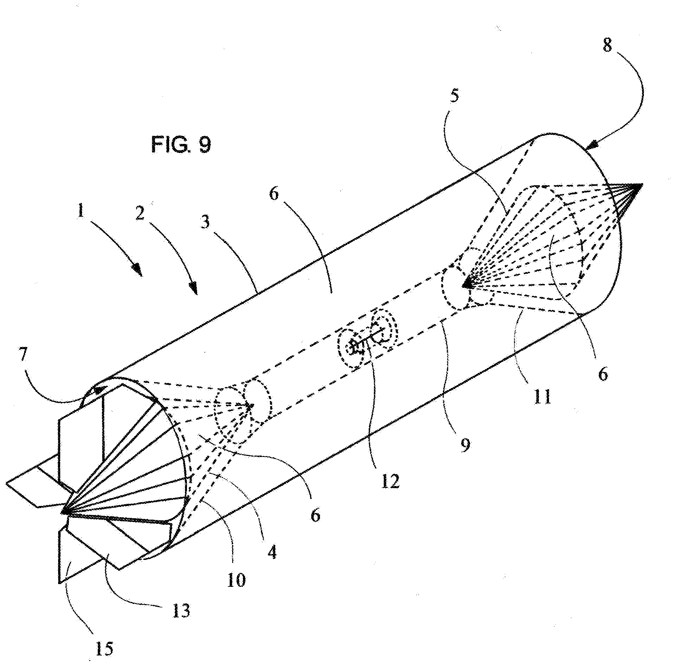

Referring to FIG. 9, a schematic perspective view will be seen of the tubular airship showing the aft bifurcated active & non active attitudinal control wings only embodiment of the present invention having winged control surfaces in the aft fuselage air outlet 7, only, in the tubular airship 1; the fuselage air deflector cone fore 5, only, positioned in the fuselage air inlet 8, providing reduced weight and air flow restriction into the fuselage inner air passageway inlet funnel 11. The airship 1, shown having a fuselage 2, fuselage tubular hull 3, plurality of resilient gas bags 6, inner air passageway 9, propulsion means 12, fuselage air deflector cone aft 4, fuselage inner air passageway outlet funnel 10, bifurcated active & non active horizontal attitudinal control wings 13, bifurcated active & non active vertical attitudinal control wings 15, and fuselage air outlet 7.

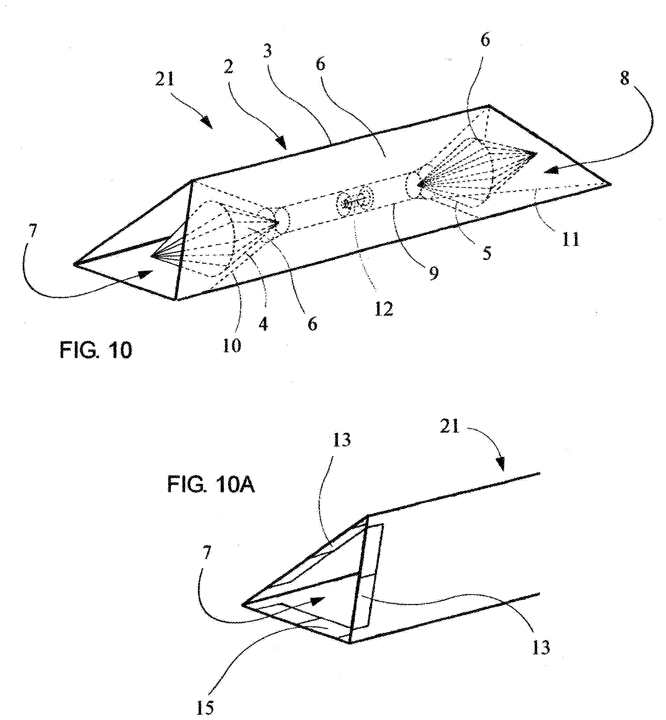

Referring to FIG. 10, it will be seen a schematic perspective view of said tubular airship 1, showing the tubular airship polygonal fuselage 21, embodiment of the present invention. Wherein it will be seen the fuselage 2, and the tubular hull 3, a plurality of resilient gas bags 6, fuselage air inlet 8, the fuselage inner air passageway inlet funnel 11, the fuselage air deflector cone fore 5, the fuselage inner air passageway 9, the propulsion means 12, the fuselage air deflector cone aft 4, the fuselage inner air passageway outlet funnel 10, the fuselage air outlet 7, providing an understanding of the tubular airship polygonal fuselage embodiment 21, showing the radar wave dissipating angular surfaces of the invention disclosed herein.

Referring to FIG. 10A, it will be seen a sectional schematic perspective partial aft view of said tubular airship 1, showing the tubular airship polygonal fuselage 21, embodiments horizontal control wings aft 15, vertical control wings aft 13, and the fuselage air outlet 7; further it will be understood that FIG. 10A, shall additionally represent the tubular airship polygonal fuselage 21, embodiments horizontal control wings fore 14, vertical control wings fore 16, and the fuselage air inlet 8, having an identical structure as the airship aft components.

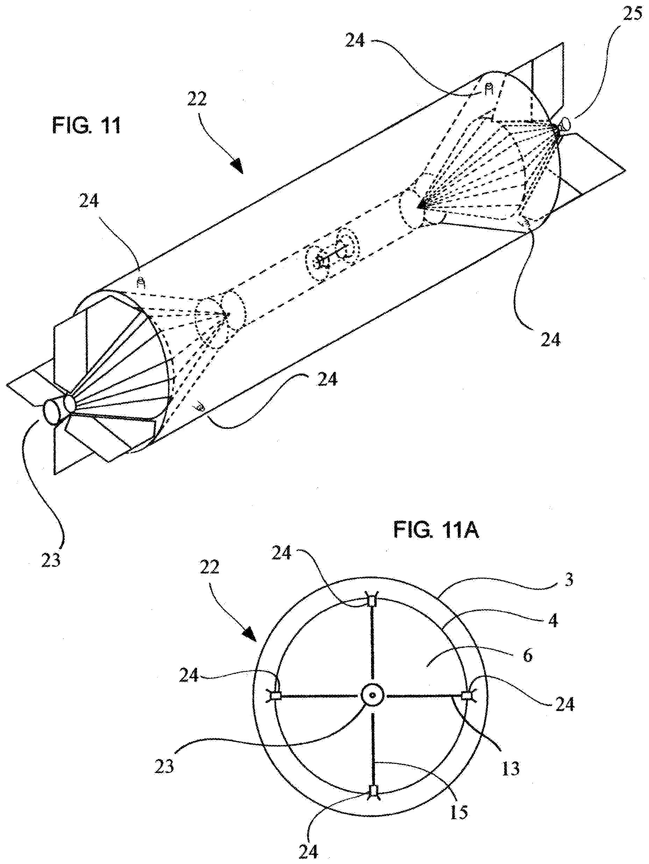

Referring to FIG. 11, it will be understood a schematic perspective view of the airship spaceship 22, embodiment of the present invention, additionally to the invention as defined in FIG. 1, further including a propulsion rocket engine thrust nozzle 23, a plurality of directional control rocket engine thrust nozzles 24, and a reverse rocket engine thrust nozzle 25, thereby providing the means of propulsion, directional, and attitudinal control inside and outside the earth's atmosphere, and in transition to and from thereof. This definition is interpreted as if all of the language of FIG. 1, were incorporated.

Referring to FIG. 11A, it will be understood a sectional aft view of the airship spaceship 22, embodiment of the present invention additionally to the invention as defined in FIG. 1, further including the fuselage tubular hull 3, fuselage air deflector cone aft 4, resilient gas bag 6, the bifurcated active & non active horizontal attitudinal control wings 13, bifurcated active & non active vertical attitudinal control wings 15, and further including a propulsion rocket engine thrust nozzle 23, and a plurality of directional control rocket engine thrust nozzles 24; further it will be understood that FIG. 10A, shall additionally represent the tubular airship polygonal fuselage 21, embodiments horizontal control wings fore 14, vertical control wings fore 16, and the fuselage air inlet 8, having an identical structure as the airship aft components. This definition is interpreted as if all of the language of FIG. 1, were incorporated.

Although the best mode contemplated by the inventor of carrying out the present invention is disclosed above, practice of the present invention is not limited thereto. It will be manifest that various additions, modifications and rearrangements of the features of the present invention may be made without deviating from the scope of the underlying inventive concept, as defined by the claims. In addition, the individual components need not be fabricated from the disclosed material, but could be fabricated from virtually any suitable material. Moreover, the individual components need not be formed in the disclosed shapes, or assembled in the disclosed configuration, but could be provided in virtually any shape, and assembled in virtually any configuration. Further, although many elements and components are described herein as physically separate modules, it will be manifest that they may be integrated into the apparatus with which it is associated.

### OPERATION

The manner of using the improved airship as so far described, it will be apparent that by filling said plurality of resilient gas bags with helium or hydrogen gas, and fueling said plurality of propulsion means fuel tanks, and by initiating the jet engine combustion sequence and thereby the air propulsion, that, air flow will thereby be directed into the airship fore air intake funnel, around the fore air deflector cone & winged air control surfaces into & through the inner air passageway, into & through the engine propulsion means, out through the aft air funnel around the aft air deflector cone & winged air control surfaces so that by variably increasing and decreasing propulsion means rpm thereby air flow, and operate-ably actuating the winged air control surfaces said air ship is operate-ably controllably flown through the air, at improved speed, control, & economy.

It will further be apparent that by flying the airship as previously described, ascending to altitudes near space using dynamic buoyant lift provided by the plurality of resilient gas bags, compressors, tanks, and jet engine propulsion to beyond jet engine oxygen requirements, that by initiating rocket engine propulsion, and attitudinal thrusters, outer atmosphere space directional control is thereby provided.

Further yet that flight of the airship to altitudes below space and into inner atmosphere is provided by using rocket engine thrusters & dynamic buoyant lift provided by the plurality of resilient gas bags, compressors, & tanks, and that upon descent into inner atmospheric space to altitude and oxygen levels sufficient for jet engine ignition, jet engine ignition is initiated thereby providing airship propulsion and attitudinal control for inner atmospheric flight.

It will still further be apparent that by operating the airship as afore described and installing explosives materials in the cargo bay that the means of a buoyant missile is herein provided.

### CITATION LIST

Patent literature cited:
01. patent No. US 2009/0200416 A1, published 08/13/2009, patentee: Yee-Chun Lee;
02. patent No. US 6,766,982 B2, published 07/27/2004, patentee: Ernest Robert Drucker;
03. patent No. US 6,607,163 B2, published 08/19/2003, patentee: William D. Perry;
04. patent No. US 6,427,943 B2, published 08/06/2002, patentee: Yoshio Yokomaku;
05. patent No. US 6,354,535 B1, published 03/12/2002, patentee: William D. Perry;
06. patent No. US 5,645,248, published 07/08/1997, patentee: J. Scott Campbell;
07. patent No. US 5,071,090, published 12/10/1991, patentee: Masakatsu Takahashi;
08. patent No. US 4,967,983, published 11/06/1990, patentee: Brian C. Motts;
09. patent No. US 4,685,640, published 08/11/1987, patentee: John E. Warrington;
10. patent No. US 3,620,485, published 11/16/1971, patentee: Egon Gelhard;
11. patent No. US 3,346,216, published 10/10/1967, patentee: P. Desmarteau;
12. patent No. US 3,288,397, published 11/29/1966, patentee: J.R. Fitzpatrick;
13. patent No. US 3,185,411, published 05/25/1965, patentee: G. Gembe;
14. patent No. US 2,475,786, published 07/12/1949, patentee: J.L. Jordan;
15. patent No. US 2,384,893, published 09/18/1945, patentee: L.H. Crook;
16. patent No. US 1,998,380, published 04/16/1935, patentee: M. Medoff;
17. patent No. US 1,895,518, published 01/31/1933, patentee: G.W. Peck;
18. patent No. US 1,835,260, published 12/08/1931, patentee: C. Barrera;
19. patent No. US 1,343,428, published 06/15/1920, patentee: C.C. Berry.

Non-Patent literature cited:
01. Apr 22, 2009, Defense System Journal report: LEMV Airship Program Readies for Launch;
02. Apr 11, 2011, The Editor report: US Air force funds $86 mil dollar Blue Devil 2 demonstration airship;
03. Nov 01, 2011, Congress of the United States of America Congressional Budget Office report: Recent Development Efforts for Military Airships;
04. Mar 01, 2012, Wired.com report: Air Force (cancels) Spy Blimp;
05. Feb 14, 2013, Wired.com report: Army (cancels) Spy Blimp.

## Claims

1. An airship (1) comprising:
a linear straight tubular shaped fuselage (2), said fuselage having an inner air passageway (9) axially extending there through tapering inwardly from the furthest circumferential peripheral exterior edges of a fore of said fuselage, toward the interior mid region of said airship like a funnel, forming an air inlet opening (11) in said fuselage fore, connecting to said inner air passageway extending downstream continuing to airship aft tapering outwardly like a funnel to the furthest circumferential peripheral exterior edges of said fuselage aft forming an air outlet opening (10) in aft of said fuselage;
a means for directing airflow into and out of said airship to the circumferential peripheral regions of said air inlet and outlet openings, out of and into said inner air passageway extending through said fuselage, said means for directing airflow comprising a plurality of air deflector cones (4, 5) axially affixed centrally positioned substantially inside and extending from said air inlet and outlet openings in fore and aft in said fuselage;
a means for controlling direction, pitch, roll and yaw, and further means for directing air flow into and out of said airship, said means for controlling direction, pitch, roll and yaw, and directing air flow into and out of said airship, comprising a plurality of bifurcated active and non-active, hingeably and rotatably connected, horizontal and vertical winged control surfaces (13, 14, 15, 16) located at the front and rear of said air inlet and outlet inner air way openings, said winged control surfaces being positioned horizontally and vertically across said inner air way openings, said active control surfaces being rotatably and hingeably attached to said non active control surfaces, and a plurality of actuators attached between said air intake funnel and air outlet funnel and deflector cone sections of said fuselage to said control surfaces to operatively, rotatably actuate said hinged active control surfaces respective to said non-active control surfaces, thereby actuatably controlling direction of air flow into said air inlet opening and out of said air outlet opening;
a means for containing a plurality of lighter than air resilient gas cells, said means comprising a plurality of containers, said containers comprising said fuselage, fore and aft air deflector cones;
a means of providing lift and atmospheric buoyancy said means provided by a plurality of resilient lighter than air gas bag cells, said gas cells being filled preferably with helium or hydrogen gas;
a further means for providing lift comprises said fore and aft horizontal wing control surfaces, by rotatably positioning said active wing control surface relative to incoming and out flowing air so as to effect high and low air pressure areas respectively above and below said fore and aft horizontal wing control surfaces;
a means for propelling (12) said airship located within said inner air passageway;
a means for thermal protection shielding from jet engine exhaust said means shielding interior of said inner air passageway around and aft of: engine, said aft air deflector cone, said aft inner air way outlet funnel, and said winged control surfaces;
a means for containing operational equipment and payload bays, said means comprising space located preferably inside lower portion of said fuselage;
a means for reduced radar reflection said means comprising said tubular shaped fuselage said tubular fuselage radial surface reflectively defusing radar waves away from radar receivers;
a means for propulsive control in space, air atmosphere, and transition to and from thereof, said means comprising a main rocket engine thrust nozzle axially centrally positioned in aft of said aft air deflector cone;
a means for controlling direction, pitch, roll and yaw in space, air atmosphere, and transition to and from thereof, said means comprising a plurality of rocket engine thrust nozzles positioned fore, aft, top, bottom, left, and right of said fuselage exterior;
a means for further reduced radar cross section said means provided by polygonal tubular fuselage embodiments flat surfaces reflectively defusing radar waves away from the radar receiver.

2. An airship as in claim 1 wherein said tubular fuselage has a straight linear tubular hull having a substantially smooth exterior surface of said tubular fuselage.

3. An airship as in any preceding claim wherein said means for propelling said airship comprises preferably a high bypass jet engine, located within said inner air passageway mid region within said tubular fuselage.

4. An airship as in any preceding claim wherein said means for thermal protection shielding of jet engine exhaust heat comprising preferably phenolic impregnated carbon ablator material, ablative heat shields, passive or active cooling means.

5. An airship as in any preceding claim wherein means for propelling said airship comprises a jet engine turbo prop having a plurality of propellers connect fore and aft to a jet engine located within said inner air passageway mid region within said tubular fuselage.

## Patentansprüche

1. Ein Luftschiff (1), umfassend:
Einen linearen geraden röhrenförmigen Rumpf (2), dieser Rumpf hat einen inneren Luftdurchgang (9), der sich axial dort hindurch erstreckt und nach innen konisch von den am weitesten entfernten äußeren umlaufenden peripheren Rändern eines Vorderteils des Rumpfs zu dem inneren mittleren Bereich des besagten Luftschiffs wie ein Trichter zuläuft und eine Lufteinlassöffnung (11) in besagtem Rumpf-Vorderteil bildet, die mit dem besagten inneren Luftdurchlass verbunden ist, der sich nach hinten zum Luftschiff-Hinterteil erstreckt und nach außen konisch wie ein Trichter zum am weitesten entfernten äußeren umlaufenden peripheren Rand des besagten Rumpf-Hinterteils zuläuft und einen Luftdurchlass (10) im Hinterteil des besagten Rumpfs bildet;
eine Vorrichtung für die Lenkung eines Luftstroms in und aus dem besagten Luftschiff zu den umlaufenden peripheren Bereichen der Lufteinlass- und Luftauslassöffnungen, aus und in den besagten inneren Luftdurchlass, der sich durch den besagten Rumpf erstreckt, diese Vorrichtung für die Lenkung des Luftstroms umfasst eine Vielzahl von Windabweiserkegeln (4, 5), die axial befestigt und im Wesentlichen mittig innen positioniert sind und sich von den besagten Lufteinlass- und Luftauslassöffnungen im Vorderteil und Hinterteil in diesem Rumpf erstrecken;
eine Vorrichtung für die Steuerung der Richtung und des Roll-, Nick-, Gierwinkels, und ferner eine Vorrichtung für die Lenkung des Luftstroms in und aus dem besagten Luftschiff, diese Vorrichtung für die Steuerung der Richtung, des Roll-, Nick-, Gierwinkels und die Lenkung des Luftstroms in und aus dem Luftschiff umfasst eine Vielzahl von gegabelten aktiven und nicht-aktiven, klappbar und drehbar verbundenen, horizontal und vertikal geflügelten Steuerflächen (13, 14, 15, 16), die an der Vorder- und Rückseite der besagten Lufteinlass- und Luftauslassöffnungen des inneren Luftdurchlasses positioniert sind, diese geflügelten Steuerflächen sind horizontal und vertikal an den besagten inneren Luftdurchlassöffnungen positioniert, die aktiven Steuerflächen sind drehbar und klappbar an den nicht-aktiven Steuerflächen befestigt, und eine Vielzahl von Stellgliedern sind zwischen dem Lufteinlasstrichter und dem Luftauslasstrichter und den Windabweiserkegel-Abschnitten des Rumpfs an den Steuerflächen befestigt, um betriebsbereit drehbar die angelenkten aktiven Steuerflächen im Verhältnis zu den nicht-aktiven Steuerflächen zu betätigen und dadurch anlenkbar die Richtung des Luftstroms in die Lufteinlassöffnung und aus der Luftauslassöffnung zu steuern;
eine Vorrichtung für die Aufnahme einer Vielzahl von elastischen Gaszellen, die leichter als Luft sind, diese Vorrichtung umfasst eine Vielzahl von Behältern, diese Behälter umfassen den besagten Rumpf, den Vorder- und Hinterteil der Windabweiserkegel;
eine Vorrichtung zur Bereitstellung von Auftrieb und atmosphärischer Tarierung, diese Vorrichtung wird von einer Vielzahl elastischer Gaszellen, die leichter sind als Luft, bereitgestellt, wobei die Gaszellen vorzugsweise mit Helium oder Wasserstoffgas gefüllt sind;
eine weitere Vorrichtung für die Bereitstellung von Auftrieb umfasst die besagten horizontalen Flügel-Steuerflächen an Vorderteil und Hinterteil, durch drehbares Positionieren der aktiven Flügel-Steuerfläche im Verhältnis zur einströmenden und ausströmenden Luft, um Hochdruck- bzw. Niederdruckbereiche über und unter den horizontalen Steuerflächen an Vorderteil und Hinterteil hervorzurufen;
eine Vorrichtung für den Antrieb (12) des besagten Luftschiffs, das innerhalb des inneren Luftdurchlasses untergebracht ist;
eine Vorrichtung für den Wärmeschutz aus Triebwerkabgasen, diese Vorrichtung schützt das Innere des inneren Luftdurchlasses um und hinter: dem Motor, dem hinteren Windabweiserkegel, dem inneren Luftauslasstrichter am Hinterteil und die geflügelten Steuerflächen;
eine Vorrichtung für die Aufnahme der Betriebsausrüstung und der Ladebuchten, diese Vorrichtung umfasst einen Raum, der vorzugsweise im Inneren des unteren Teils des besagten Rumpfs untergebracht ist;
eine Vorrichtung für reduzierte Radarreflexion, besagte Vorrichtung umfasst den röhrenförmigen Rumpf, wobei die radiale Fläche des röhrenförmigen Rumpfs reflektierend die Radarwellen weg von den Radarempfängern abschwächt;
eine Vorrichtung für die Antriebssteuerung im Raum, in der Lufthülle und den Übergang zu und von diesen Elementen, diese Vorrichtung umfassend eine Schubdüse des Hauptraketentriebwerks, die axial mittig im Hinterteil des Windabweiserkegels positioniert ist;
eine Vorrichtung für die Steuerung der Richtung, des Roll-, Nick-, Gierwinkels im Raum, in der Lufthülle, und den Übergang zu und von diesen Elementen, diese Vorrichtungen umfassend eine Vielzahl von Schubdüsen der Raketentriebwerke, die im Vorderteil, Hinterteil, an der Oberseite, Unterseite, links und rechts des besagten Außenrumpfs positioniert sind;
eine Vorrichtung für einen weiter reduzierten Radar-Querschnitt, diese Vorrichtung wird von ebenen Flächen der polygonalen röhrenförmigen Rumpfausführungen bereitgestellt, die reflektierend Radarwellen weg von dem Radarempfänger abschwächen.

2. Ein Luftschiff nach Anspruch 1, wobei der röhrenförmige Rumpf eine gerade lineare röhrenförmige Hülle mit einer im Wesentlichen glatten Außenfläche des röhrenförmigen Rumpfs aufweist.

3. Ein Luftschiff nach einem der vorhergehenden Ansprüche, wobei die besagte Vorrichtung für den Antrieb des Luftschiffs vorzugsweise ein Mantelstromtriebwerk umfasst, das innerhalb des mittleren Bereichs des besagten inneren Luftdurchlasses im röhrenförmigen Rumpf untergebracht ist.

4. Ein Luftschiff nach einem der vorhergehenden Ansprüche, wobei die Vorrichtungen für den Wärmeschutz der Triebwerkabgase vorzugsweise phenolisch imprägniertes Material aus Kohlenstoffablation, ablative Hitzeschilder, passive oder aktive Kühlvorrichtungen umfassen.

5. Ein Luftschiff nach einem der vorhergehenden Ansprüche, wobei die Vorrichtung für den Antrieb des Luftschiffs ein Propellerturbinenluftstrahltriebwerk mit einer Vielzahl von Propellern umfasst, die vor und hinter einem Triebwerk verbunden sind, das in dem besagten mittleren Bereich des Luftdurchlasses im röhrenförmigen Rumpf untergebracht ist.

## Revendications

1. Dirigeable (1) comprenant :
un fuselage en forme tubulaire linéaire droite (2), ledit fuselage présentant une voie de passage d'air intérieure (9) s'étendant axialement ici à travers le rétrécissement vers l'intérieur à partir des bords périphériques circonférentiels les plus extérieurs d'un avant dudit fuselage, vers la région centrale intérieure dudit dirigeable comme un entonnoir, formant une ouverture d'entrée d'air (11) dudit avant du fuselage, raccordant ladite voie de passage d'air intérieure s'étendant vers l'aval continuant vers l'élargissement vers l'extérieur de l'arrière du dirigeable comme un entonnoir vers les bords périphériques circonférentiels les plus extérieurs dudit arrière du fuselage formant une ouverture de sortie d'air (10) dans l'arrière dudit fuselage ;
un moyen servant à la direction de l'écoulement d'air dans et hors dudit dirigeable vers les régions périphériques circonférentielles desdites ouvertures d'entrée et de sortie d'air, hors de et dans la voie de passage d'air intérieure s'étendant à travers ledit fuselage, ledit moyen servant à diriger l'écoulement d'air comprenant une pluralité de cônes de déflecteur d'air (4, 5) apposés axialement et positionnés de façon centralisée pratiquement à l'intérieur et s'étendant depuis lesdites ouvertures d'entrée et de sortie d'air en avant et en arrière dans ledit fuselage ;
un moyen servant à la commande de la direction, du tangage, du roulis et du lacet et un autre moyen servant à la direction de l'écoulement d'air dans et hors dudit dirigeable, ledit moyen servant à la commande de la direction, du tangage, du roulis et du lacet et à la direction de l'écoulement d'air dans et hors dudit dirigeable, comprenant une pluralité de surfaces de commande ailées bifurquées actives et non actives, reliées de manière articulée et de manière rotative horizontales et verticales (13, 14, 15, 16) situées à l'avant et à l'arrière desdites ouvertures de passage d'air interne d'entrée et de sortie d'air, lesdites surfaces de commande ailées étant positionnées horizontalement et verticalement sur toute l'étendue des ouvertures de passage d'air interne, lesdites surfaces de commande actives étant fixées de manière rotative et de manière articulée auxdites surfaces de commande non actives et à une pluralité d'actionneurs raccordés entre ledit entonnoir d'admission d'air et ledit entonnoir de sortie d'air et les sections de cône de déflecteur dudit fuselage aux dites surfaces de commande pour actionner de manière fonctionnelle et de manière rotative lesdites surfaces de commande actives articulées respectives aux dites surfaces de commande non actives, ce qui permet de commander de manière actionnable la direction de l'écoulement d'air dans ladite ouverture d'entrée d'air et hors de ladite ouverture de sortie d'air ;
un moyen servant au confinement d'une pluralité de cellules souples de gaz plus léger que l'air, ledit moyen comprenant une pluralité de conteneurs, lesdits conteneurs comprenant ledit fuselage, cônes de déflecteur d'air en avant et en arrière ;
un moyen servant à la fourniture de la portance et de la flottabilité atmosphérique dudit moyen fourni par une pluralité de cellules souples de sac de gaz plus léger que l'air, lesdites cellules de gaz étant remplies de préférence avec de l'hélium ou de l'hydrogène gazeux ;
un autre moyen servant à la fourniture de la portance comprend lesdites surfaces de commande d'aile en avant et en arrière horizontales, par le positionnement de manière rotative de ladite surface de commande d'aile active se rapportant à l'écoulement d'air entrant et sortant de manière à affecter les zones de haute et de faible pression d'air respectivement au-dessus et au-dessous des dites surfaces de commande d'aile avant et arrière horizontales ;
un moyen servant à la propulsion (12) dudit dirigeable situé à l'intérieur de ladite voie de passage d'air intérieure ;
un moyen servant au blindage de la protection thermique de l'échappement du moteur à réaction, ledit moyen servant au blindage de la voie de passage d'air intérieure autour et à l'arrière du : moteur, dudit cône de déflecteur d'air arrière, dudit entonnoir de sortie de la voie d'air intérieure arrière et desdites surfaces de commande ailées ;
un moyen servant au confinement des équipements fonctionnels et des baies de charge utile, ledit moyen comprenant l'espace situé de préférence à l'intérieur de la partie inférieure dudit fuselage ;
un moyen servant à la réduction de la réflexion radar, ledit moyen comprenant ledit fuselage en forme tubulaire de ladite surface radiale du fuselage tubulaire en dissipant par réflexion les ondes radar à distance des récepteurs radar ;
un moyen servant à la commande de propulsion dans l'espace, l'air de l'atmosphère et à la transition vers et à partir de celui-ci, ledit moyen comprenant une tuyère de poussée du moteur de fusée principal positionnée de manière axiale et centrale dans l'arrière dudit cône de déflecteur d'air arrière ;
un moyen servant à la commande de direction, de tangage, de roulis et de lacet dans l'espace, l'air de l'atmosphère et à la transition vers et à partir de celui-ci, ledit moyen comprenant une pluralité de tuyères de poussée du moteur de fusée positionnées à l'avant, à l'arrière, en haut, en bas, à gauche et à droite dudit fuselage extérieur ;
un moyen servant à réduire en outre la section transversale du radar, ledit moyen fourni par des surfaces planes des modes de réalisation du fuselage tubulaire polygonal en dissipant par réflexion les ondes radar à distance des récepteurs radar.

2. Dirigeable selon la revendication 1, dans lequel ledit fuselage tubulaire présente une coque tubulaire linéaire présentant une surface extérieure pratiquement lisse dudit fuselage tubulaire.

3. Dirigeable selon une quelconque des revendications précédentes, dans lequel ledit moyen servant à la propulsion dudit dirigeable comprend de préférence un moteur à réaction à taux de dilution élevé, situé dans ladite région centrale de la voie de passage d'air intérieure à l'intérieur dudit fuselage tubulaire.

4. Dirigeable selon une quelconque des revendications précédentes, dans lequel ledit moyen servant au blindage de protection thermique de la chaleur de l'échappement du moteur à réaction comprend de préférence un matériau d'ablation de carbone imprégné phénolique, des boucliers thermiques ablatifs et un moyen de refroidissement passif ou actif.

5. Dirigeable selon une quelconque des revendications précédentes, dans lequel le moyen servant à la propulsion dudit dirigeable comprend un turbopropulseur de moteur à réaction présentant une pluralité d'hélices reliées en avant et en arrière à un moteur à réaction situé dans ladite région centrale de la voie de passage d'air intérieure à l'intérieur dudit fuselage tubulaire.
